# EUROPEAN PATENT APPLICATION

(11) **EP 0 537 118 A1**
(43) Date of publication of application: **14.04.1993**
(21) Application number: 92830504.4
(22) Date of filing: 18.09.1992
(51) Int. Cl.: C04B 35/58, F16J 15/34

(54) **Method of producing mechanical face seal rings of reaction bonded silicon nitride, and product obtained therefrom**

(30) Priority: 09.10.1991 IT RM910765
(71) Applicant: ENEA ENTE PER LE NUOVE TECNOLOGIE, L'ENERGIA E L'AMBIENTE, I-00198 Roma (IT)
(72) Inventor: D'Alessandro, Gianni, I-00058 S. Marinella (Roma) (IT); Guerrini, Fausto, I-06049 Spoleto (Perugia) (IT); Nannetti, Carlo Alberto, I-57100 Livorno (IT)
(74) Representative: Sarpi, Maurizio

(57) **Abstract**

A method for producing rotating sealing means, in particular mechanical face seal rings for cooling pumps by compacting silicon dust in the desired form, and nitriding it in oven during two steps: one step under vacuum up to about 700°C, the second step under atmospheric pressure in a static atmosphere of N₂ containing dry hydrogen.

## Description

The present invention relates to a method of producing mechanical face seal rings of reaction bonded silicon nitride (RBSN) as well as the mechanical face seal ring obtained from such method.

The efficiency of the mechanical face seals is an important factor for the development of companies manufacturing or using such seals, in partitular motor industries, as a consequence of the present design trends directed to enhance the reliability of the components without increasing the production cost.
Accordingly, the use of more and more reliable materials is mandatory also in the cooling systems of the motors, in particular as far as the interaction with the cooling fluids and the resistance to thermal shocks is concerned. Ceramic, non-oxide materials (Si₃N₄, SiC, TiB₂, TiC) are promising materials for the use as mechanical- face seals generally of fluid pumps. On the other hand, for mass production where the economicity of the product is highly important, the use of such materials is inhibited by the high cost of manufacture due to the cost of raw materials and the complex manufacturing technology.
At the present state of art, sealing couples formed by alumina/carbon, silicon carbide/carbon or silicon carbide/silicon carbide are usually employed in the motor industry. The first couple can have realiability problems due to the little resistance of the alumina to the thermal shocks.
Couples in which silicon carbide is present have cost problems, and in case of SiC/SiC couples there are also troubles due to the high temperature which is generated at the sliding surfaces and can cause a deposition of materials on the interface, thus impairing the efficiency of the face seal.
Silicon nitride produced by reaction, i.e. by direct nitriding of silicon dust in atmosphere of N₂, have the following advantages:
- low cost of raw materials;
- no withdrawal during the thermal treatment;
- relatively moderate nitriding temperature;
- optimum resistance to the thermal changes and wear.

Methods mainly directed to reduce the nitriding time while keeping the relative simplicity unchanged have been not pointed out till now. On the other hand RBSN has never been used or provided as material for mechanical face seals.
The sliding surfaces which are involved in a mechanical rotating face seal should feature among the others the following characteristics:
- roughness and profile of the two contacting flat surfaces should provide and maintain a lubricating film during steady operations besides the sealing under rest conditions;
- surfaces should be generally flat also under thermal shock conditions due to friction;
- high resistance to wear;
- good resistance to thermal changes.

The good operation of a seal depends upon the selection of materials having the characteristics mentioned above, a suitable machining of the surfaces, and the coupling of materials which are compatible as far as the tribologic aspect is concerned. For example, typical seals presently used in motor industry formed of Al₂O₃/carbon couple frequently have troubles due to the poor resistance of the alumina to the thermal changes.
More advanced seals formed of SiC/SiC couple, besides having a generally higher cost, sometimes cause troubles due to the high temperature generated on the sliding surfaces, and surface formations impairing the efficiency as already mentioned.

According to the invention, reaction bonded silicon nitride (RBSN) is used as material for annular sliding paths of mechanical face seals. Still according to the invention, the reaction bonding method (nitriding of silicon dust compacted in the form of the desired manufactured article) is optimized so as to provide both high proportions of conversion to nitride and good construction characteristics notwithstanding a strong decrease of the reaction time at high temperature, thus allowing production cost to be substantially reduced.

An embodiment of the method according to the invention will now be described by way of an illustrative, non-limitative example.

### EXAMPLE

Silicon dust having grain size between 0.03 and 15 µm, referred to as 50% average value of the weight distribution, is used as raw material. As far as the presence of impurities is concerned, concentrations of Fe and O₂ are acceptable up to 2-3% by weight.
Silicon dust is shaped in the annular form by conventional ceramics techniques (compaction) up to densities between 50% and 70% of the theoretical density. The formed rings are subjected to a thermal treatment in oven under vacuum (10⁻³, 10⁻⁵ bar) in a controlled atmosphere up to about 700°C, and then under atmospheric pressure in a preferably static atmosphere of N₂ comprising 2-10% by volume of dry H₂. By the very beginning of the nitriding reaction (1210°C) it is very important to keep the reaction speed under control as such reaction is highly esothermal and therefore any local melting of the non-reacted silicon which would impair the construction characteristics of the nitrided material should be inhibited.
The kinetics of the reaction is monitored with reference to the amount of N₂ continuously introduced into the system in order to compensate the amount of N₂ absorbed by silicon. The absorption rate should be controlled and limited through the increasing rate of the oven temperature so that a nearly complete nitriding in a time lower than or equal to 10 hours can be guaranteed; such time interval corresponds to a temperature increase from 1210°C to 1470°C. The melting temperature of silicon (1410°C) should be exceeded only after the conversion to nitride has reached 90%.
The nitrided samples have the following minimum nitriding percentages:
- 91-93% referring to samples having apparent density of the compacted starting silicon equal to 60-70% of the theoretical value;
- 96-98% referring to samples having apparent density of the compacted starting silicon equal to 50-60% of the theoretical value.

The materials provided by such method have structural and mechanical characteristics typical of RBSN which is produced by the conventional nitriding methods under atmospheric pressure which require a much more prolonged time (30-70 hours).
The sintered, thick silicon nitride has an excellent resistance to thermal shock and a thermal stability due to the low coefficient of expansion as well as to an optimum resistance to corrosion and wear. It can then be considered especially adapted as material for rotating face seals. However, it has a high production cost originated from the high cost of the raw materials, high temperatures, and complexity of the sintering process as well as the need of an expensive mechanical finishing caused by a considerable withdrawal and possible deformations due to the thermal treatment.
RBSN has the same advantages as sintered SI₃N₄ as far as its application as face seal ring is concerned; in addition, it has further advantages connected to a lower cost of the raw material (silicon dust) and to the manufacturing method by reaction bonding so that the material does not undergo perceptible size variations, thus allowing the expensive mechanical finishing to be eliminated.
Furthermore, RBSN has by nature generally opera residual pores to the order of 15-30%. The average size of the pores and their distribution depends both upon the grain size of the used Si and the nitriding conditions. As mentioned above, such porosity is one of the advantages provided by the method according to the invention, because a lubricating film is formed and maintained between the sliding surfaces as well as roughness and flatness of such surfaces necessary for a good operation of the face seal are assured.
RBSN allow the problems connected to the poor resistance of alumina to the thermal shock to be overcome by comparison with the typical materials presently used as face sea-Is for cooling pumps of car motors; moreover, RBSN produced by the method according to the invention has considerable lower production cost than SiC and sintered Si₃N₄ due also to the substantial reduction of the time needed for the thermal cycle.
Rings of RBSN produced by the method of the invention were mounted on typical seals of the motor industry, coupled with several carbon materials and tested under the following operating conditions:
- temperature of the fluid (a 30% water solution of "PARAFLU", trademark of an antifreezing solution): 90°C;
- speed of rotation: 6000 rpm;
- overpressure of the fluid: 1 bar;
- test duration: 1000 hours.

The results of tests under such operating conditions fully came up to the expectations:
a) The loss was nil or in any case very small and quite lower than the suitable value for a correct operation of the face seal;
b) The check of the annular sliding paths of the face seals at the end of the test showed sliding surfaces without scoring or other damage;
c) The wear observed in the face seal rings of RBSN was nil;
d) The diagrams of roundness and roughness plotted before and after the test fully satisfied the specifications.

A further confirmation of the whole fitness of RBSN produced by the method according to the invention was pointed out by the results of the tests under critical (dry) operating conditions carried out at a speed of rotation of 855 rpm, coupling overpressure of 2.6 bar, duration of 4 hours. Notwithstanding the severe conditions, no couple exhibited apparent seizures, and the wear of the materials was nil or neglectable. The present invention has been described according to a preferred embodiment, however, it should be understood that changes can be made by those skilled in the art without departing from the scope of the present industrial invention.

## Claims

1. A method of producing manufactured article highly resistant to the sliding friction, in particular mechanical face seal rings of reaction bonded silicon nitride (RBSN), characterized by the steps of: compacting silicon dust in the form of the desired article, and nitriding in oven under controlled atmosphere, i.e. first under vacuum and then under atmospheric pressure.

2. The method of claim 1, characterized in that the grain size of the silicon dust is 0.03 to 15 µm referred to the 50% average value of the weight distribution.

3. The method of claims 1 and 2, characterized in that silicon dust contains 0.05 to 3% of Fe and up to 3-4% of O₂.

4. The method of claims 1 to 3, characterized in that silicon dust has a density of 50 to 70% of the theoretical density.

5. The method of claims 1 to 4, characterized in that the silicon is preferably nitrided under atmospheric pressure and in a static atmosphere of N₂.

6. The method of claims 1 to 5, characterized in that the nitriding atmosphere of N₂ contains 2 to 10% by volume of hydrogen.

7. The method of claims 1 to 6, characterized in that the reaction of absorption of N₂ is carried out so as not to cause any local melting of the silicon due to the esothermal reaction but to provide a complete nitriding in a time lower than or equal to 10 hours, during which the temperature is increased from 1210°C to 1430-1470°C.

8. The method of claims 1 to 7, characterized in that RBSN has a minimum nitriding percentage between 90 and 93% for materials having a silicon density between 60 and 70% of the theoretical density, and a minimum nitriding percentage between 96 and 98% for materials having a silicon density between 50 and 60% of the theoretical density.

9. The method of claims 1 to 8, characterized in that no withdrawal occurs in the treated material during said thermal treatment

10. A mechanical rotating face seal ring, in particular for pumps of the cooling system of explosion engines, wherein such seal is made of reaction bonded silicon nitride produced by the method of claims 1 to 9.

11. The mechanical face seal ring of claim 10, wherein such seal is coupled to carbon material and/or other materials which are compatible as far the tribologic aspect is concerned.
